# EUROPEAN PATENT APPLICATION

(11) **EP 0 784 090 A1**
(43) Date of publication of application: **16.07.1997**
(21) Application number: 95920239.1
(22) Date of filing: 01.06.1995
(51) Int. Cl.: C09K 5/04

(54) **MIXED COOLANT COMPOSITION**

(71) Applicant: Harashima, Tomoko, Kikuchi-gun Kumamoto 861-11 (JP)
(72) Inventor: HARASHIMA, Yuji, Kumamoto 869-02 (JP)
(74) Representative: Clisci, Serge
(86) International application number: JP9501080
(87) International publication number: WO9533801

(57) **Abstract**

A mixed refrigerant composition applicable to the conventional coolers using specified chlorofluorocarbons without the necessity for changing various parts thereof and a lubricating oil of the compression pump. The composition comprises a substitute for refrigerant chlorofluorocarbon and a refrigerant composition prepared by mixing one or more polyhydric alcohols (14 and 15), a surface-active composition (17) and a lubricant (18) in a hermetically sealed vessel (1) cooled to -30 °C or below. Examples of the polyhydric alcohol are ethylene glycol (14), propylene glycol (15) and a mixture thereof. Examples of the surface-active composition (17) are those containing phosphoric ester surfactants. Examples of the lubricant (18) are toluene, xylene and phthalic acid. An example of the substitute for refrigerant chlorofluorocarbon is R-134a mainly comprising CF₃CH₂F. An aqueous solution of sodium chloride is used as a filler.

## Description

### TECHNICAL FIELD

The present invention relates to a mixed coolant composition and, more particularly, to a mixed coolant composition containing a substitute Fron for a coolant.

### BACKGROUND ART

As a coolant for use with an air conditioner such as, for example, a car cooler or the like, there has hitherto been employed a chlorinated fluorinated carbon compound (hereinafter referred to as "a particular Fron"). As such a particular Fron, there is known, for example, chlorinated fluorinated carbon compound represented by the chemical formula, CCl₂F₂, and generally called "R-12".

Recently, however, it is clarified that, once such a chlorinated fluorinated carbon compound irradiated into the atmosphere reaches the ozone layer in the state that its chemical structure is sustained as it is and it is decomposed therein by ultraviolet rays or by other means, chlorine radicals are generated and they decompose the ozone layer. Therefore, the preparation and the use of such a particular Fron is now in the process of being prohibited.

Extensive review has been made on substitute Frons to be employed in place of the particular Fron. As a result, there has been developed a substitute Fron referred to as "R-134a" as a substitute for the particular Fron called "R-12". The substitute Fron called R-134a may be represented by the chemical formula, CF₃CH₂F. As this substitute Fron does not contain any chlorine atom in its moiety, it is considered that it may not destroy the ozone layer even if it would reach the ozone layer while maintaining its chemical structure and it would be decomposed.

When the substitute Fron called R-134a is intended to be applied to a conventional cooling apparatus for use with the particular Fron called R-12, however, it suffers from the inconveniences that, in order to avoid the seizing of its compressor, the leakage of gases or the like, there should be changed the manner of connection of a valve, the size of a valve, a variety of parts such as O-rings, and the kind of a lubricant for the compressor.

Therefore, the present invention has the object to provide an improvement in a coolant composition.

More specifically, the object of the present invention is to provide a mixed coolant composition capable of being applied as it is to a conventional cooling apparatus for use with the particular Fron without changing a variety of its parts and the lubricant for its compressor.

Further, the object of the present invention is to provide a mixed coolant composition with a substitute Fron for a coolant, which is capable of being applied as it is to a conventional cooling apparatus for use with the particular Fron without changing a variety of its parts and the lubricant for its compressor.

### DISCLOSURE OF INVENTION

In order to achieve the objects of the present invention as described hereinabove, the mixed coolant composition according to the present invention is characterized in that it comprises a coolant composition and a substitute Fron for a coolant, the coolant composition being obtainable by admixing a mixture of raw materials containing one or more members of polyvalent alcohols, a surface-active composition and a lubricant in an airtight closed container cooled at -30 °C or lower.

As the polyvalent alcohols, there may be mentioned, for example, ethylene glycol, propylene glycol, tripropylene glycol, diethylene glycol, triethylene glycol, tetraethylene glycol, dipropylene glycol, hexylene glycol and ethylene glycol dimethyl ether. These polyvalent alcohols may be employed singly or in admixture with two or more. As the surface-active composition, there may be employed ones containing a surface-active agent of a phosphate ester type. As the lubricant, there may be employed an alkylbenzene such as toluene, xylene or the like, and an alkylbenzene derivative such as phthalic acid or the like.

The mixed coolant composition according to the present invention can be employed particularly advantageously when the coolant composition contains CF₃CH₂F as a major component of the substitute Fron for the coolant.

The mixed coolant composition according to the present invention may further contain as a filler a component causing no remarkable decrease in the cooling action for the mixture of the raw materials. The such filler may include, for example, a sodium chloride aqueous solution.

When the mixed coolant composition according to the present invention is applied as it is to the conventional cooling apparatus for use with the particular Fron without making any changes in the variety of its parts and in the kind of the lubricant for its compressor, it does not cause seizing for the compressor, leaking gases or the like and it can achieve the cooling effects.

By admixing the lubricant including the alkylbenzene such as toluene, xylene or the like or the alkylbenzene derivative such as phthalic acid or the like, the resulting mixed coolant composition according to the present invention can gain the action of preventing the seizing of the compressor.

The mixed coolant composition according to the present invention can be applied to the conventional cooling apparatus for use with the particular Fron called R-12 as it is by admixing the substitute Fron called R-134a containing CF₃CH₂F as a major component.

### BRIEF DESCRIPTION OF THE DRAWINGS

### [Fig. 1]

A schematic view in section showing an example of the configuration of an apparatus for producing a coolant composition for the present invention.

### [Fig. 2]

A graph showing the relationship of the temperature with the saturation pressure of the coolant composition obtainable in each of the examples according to the present invention and the particular Fron R-12.

### [Fig. 3]

A schematic view showing the configuration of a car cooler for a passenger automobile.

### BEST MODES FOR CARRYING OUT THE INVENTION

### (Example 1)

The following is a detailed description of the mixed coolant composition according to the present invention with reference to the accompanying drawings. Fig. 1 is a schematic view in section showing an example of the configuration of the apparatus for producing the coolant composition according to the present invention; Fig. 2 is a graph showing the relationship of the temperature with the saturation pressure of the coolant composition obtainable in each of the examples according to the present invention and the particular Fron R-12; and Fig. 3 is a schematic view showing the configuration of the car cooler for a passenger automobile.

The mixed coolant composition according to the present invention is a mixture of 63% of a culture composition obtainable by admixing a mixture of raw materials consisting of a mixture of propylene glycol with ethylene glycol, a surface-active composition containing a phosphate ester type surface-active agent (produced by Nikko Chemicals K.K.; Trade name: "NIKKOL") and ethanol, and a lubricant containing toluene and xylene in an airtight closed container cooled at -30 °C or lower and 37% by weight of R-134a containing the substitute Fron for a coolant, as represented by the chemical formula, CF₃CH₂F, as a major component.

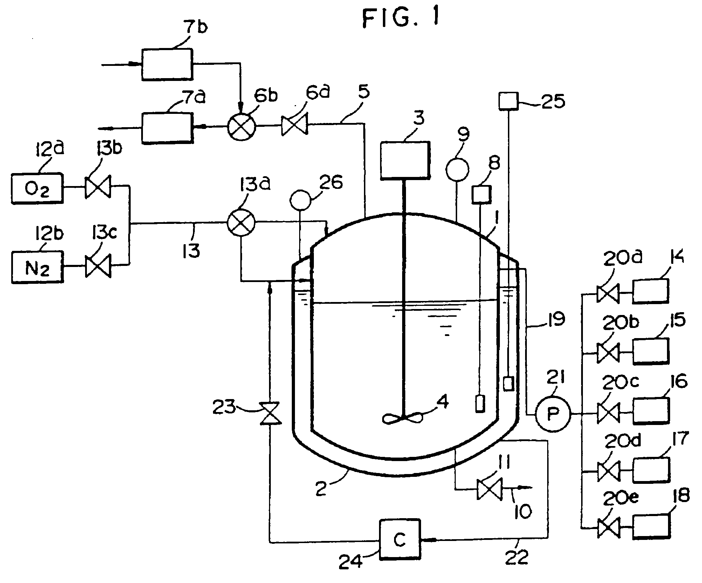

The mixed coolant composition was prepared in the manner as will be described hereinafter by using an airtight closed container 1 as shown in Fig. 1.

The airtight closed container 1 is equipped with a cooling jacket 2 at its outside and with a stirrer blade 4 at its inside, which is so disposed as to be driven rotatably by a motor 3. To the airtight closed container 1 is mounted at its upper portion a pressure regulating conduit 5 that in turn is connected to a vacuum pump 7a and an air compressor 7b through a pressure regulating valve 6a.

The pressure regulating conduit 5 is so disposed as to be connected to the vacuum pump 7a or to the air compressor 7b by operating a change-over valve 6b. The pressure regulating valve 6a is a three way valve that can also act as a safety valve so disposed as to be opened to the atmosphere to sustain the inner pressure within the airtight closed container 1 at a constant level when the inner pressure therein becomes higher than a predetermined level. The airtight closed container 1 is further equipped with a thermometer 8 for measuring the temperature of a liquid inside the container and a pressure gauge 9 for measuring the inner pressure thereof. To the bottom of the airtight closed container 1 is mounted a conduit 10 for withdrawing the product from the container through a takeoff valve 11.

To the outside of the airtight closed container 1 are mounted a liquid oxygen bomb 12a and a liquid nitrogen bomb 12b that in turn are connected to the airtight closed container 1 and the cooling jacket 2 through a conduit 13 for feeding liquefied gases. The liquefied-gases feeding conduit 13 is provided with a change-over valve 13a for shifting the supply of the liquefied gases, a supply valve 13b for supplying liquid oxygen and a supply valve 13c for supplying liquid nitrogen, so as to feed the liquid oxygen or the liquid nitrogen to the airtight closed container 1 or the cooling jacket 2 in a quantitative amount.

On the outside of the airtight closed container 1 are further disposed an ethylene glycol tank 14, a propylene glycol tank 15, a sodium chloride aqueous solution tank 16, a surface-active composition tank 17 and a lubricant tank 18 for storing each of the raw materials. Each of these tanks is connected to the airtight closed container 1 through a raw material conduit 19 for feeding the raw materials. The raw material conduit 19 is provided, respectively, with a raw material supply valve 20a, 20b, 20c, 20d and 20e so as to enable a supply of each of the raw materials in a quantitative amount. The raw material conduit 19 is further provided at its middle portion with a pressurized raw material supply pump 21 that can feed each of the raw materials even if the airtight closed container 1 is set to be in a highly pressurized state.

To the cooling jacket 2 is connected through a check valve 23 a circulation conduit 22 for withdrawing the liquefied gas fed and then circulating the liquefied gas into the liquefied gas supply conduit 13. Further, the circulation conduit 22 is provided at its middle portion with a cooler 24 for cooling the liquefied gas withdrawn from the cooling jacket 2 to which in turn are mounted a thermometer 25 for measuring the temperature of the liquid therein and a pressure gauge 26 for measuring the inner pressure of the container.

In this example, the liquid nitrogen was arranged to be fed in a predetermined amount to the airtight closed container 1 by shifting the liquefied gas supply change-over valve 13a to connect the liquefied gas supply conduit 13 to the airtight closed container 1 and then by opening the liquid nitrogen supply valve 13c. After the liquid nitrogen was gasified in the airtight closed container 1 and the inside of the airtight closed container 1 was cooled therewith, the change-over valve 6b was shifted to connect the pressure regulating conduit 5 to the vacuum pump 7a, thereby allowing the gas within the airtight closed container 1 to be withdrawn and subjecting the inside of the airtight closed container 1 to preparatory cooling.

After the preparatory cooling, the liquefied gas supply change-over valve 13a was shifted to connect the liquefied gas supply conduit 13 to the cooling jacket 2 and the liquid nitrogen supply valve 13c was opened to feed liquid nitrogen in a predetermined amount to the cooling jacket 2.

Thereafter, while the motor 3 was turned on and a stirrer blade 4 was being rotated, the pressure regulating valve 6a is closed and the raw material supply valves 21a, 21b, 21d and 21e are opened and closed one after another to feed 200 grams of ethylene glycol, 500 grams of propylene glycol, 350 grams of the phosphate type surface-active agent solution and 150 grams of the lubricant to the airtight closed container 1, respectively. In the surface-active composition tank 17, there was stored as the phosphate type surface-active agent solution a mixture of a phosphate type surface-active agent with ethanol in an admixture ratio by weight of 2 to 5 (the former to the latter). Further, the lubricant tank 18 was stored with a mixture of toluene with xylene in an admixture ratio by weight of 1 to 2 (the former to the latter).

A mixture of the raw materials was stirred for 30 minutes with the stirrer blade 4 to yield a coolant composition. During the period of time for stirring, the liquid temperature in the airtight closed container 1 was maintained in the range of from -150 °C to -30 °C and it was allowed to rise to 0 °C at the time of completion of the stirring. Then, the takeoff valve 11 was opened and the resulting coolant composition was transferred through the product takeoff conduit 10 to a service can for feeding the coolant to a cooling apparatus.

Thereafter, the boiling point of the coolant composition obtained in this example was measured at each point of pressure by using the apparatus as shown in Fig. 1. The boiling point of the coolant composition was measured by feeding a predetermined amount of the resulting coolant composition to the airtight closed container 1 and setting the inner pressure of the airtight closed container 1 by means of the vacuum pump 7a to a gauge pressure of -750 mmHg when measured with the pressure gauge 9. This state was allowed to stand until the temperature of the coolant composition within the airtight closed container 1 became constant. The temperature at which the coolant composition therein became constant was set as the boiling point of the coolant composition at the pressure of -750 mmHg. Thereafter, the pressure regulating valve 6a was opened and closed to set the inner pressure of the airtight closed container 1 to -500 mmHg, -250 mmHg and 0 mmHg one after another and the boiling point of the coolant composition at each of the inner pressures was measured by repeating the procedures as described hereinabove.

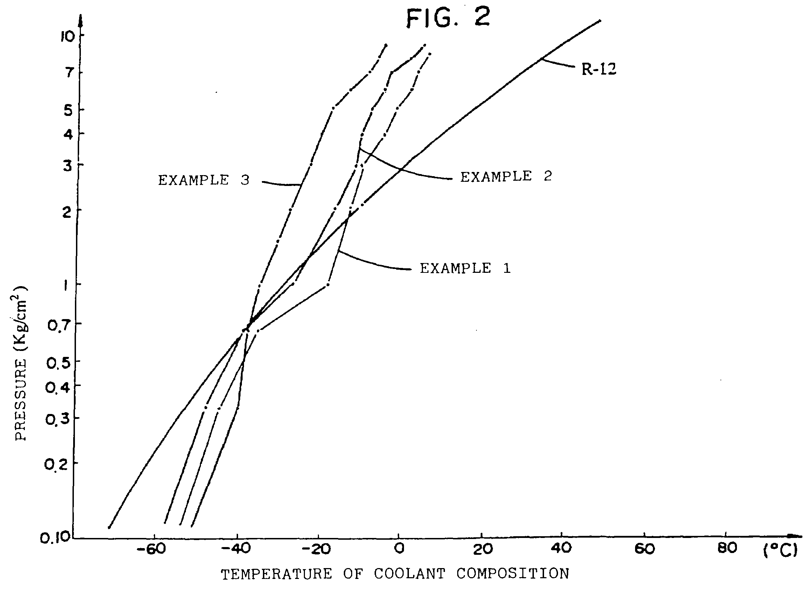

Then, the change-over valve 6b was shifted to connect the pressure regulating conduit 5 to an air compressor 7b, thereby applying pressure to the airtight closed container 1. This pressurizing operation was carried out by opening and closing the pressure regulating valve 6a and regulating the inner pressure in the airtight closed container 1 so as to shift the gauge pressure in the range of from 1 to 8 kg/cm² by a 1 kg/cm² unit, when measured with the pressure gauge 9. Further, the boiling point of the coolant composition at each pressure point was measured by repeating the procedures as described hereinabove. The results are shown in Fig. 2 and the results of Fig. 2 indicate that the coolant composition demonstrates the behaviors in a manner as equivalent of the particular Fron R-12.

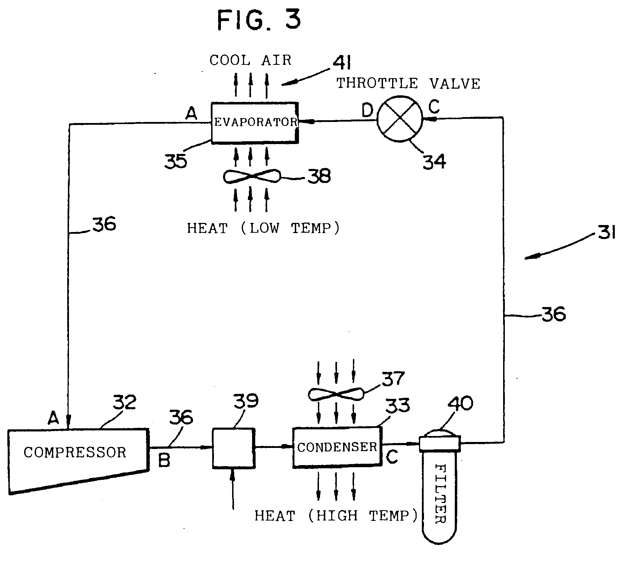

Thereafter, the coolant composition prepared in this example was fed in the amount of 340 grams to a cooler apparatus 31 as shown in Fig. 3 from the service can. Further, the substitute Fron R-134a was gradually fed in the amount of 200 grams to the cooler apparatus 31 so as to allow admixture with the coolant composition to thereby yield a mixed coolant composition. The cooler apparatus 31 was then operated with the resulting mixed coolant composition to test the cooling action of the mixed coolant composition.

The cooler apparatus 31 as shown in Fig. 3 is a car cooler of a type to be mounted to a passenger automobile and in which the particular Fron R-12 is used as a coolant. For this test, however, it was used as it is without any modifications. The cooler apparatus 31 is so arranged as to form a cooling cycle by connecting a compressor 32, a condenser 33, a throttle valve 34 and an evaporator 35 to each other by means of a conduit 36. Each of the condenser 33 and the evaporator 35 is provided with a fan 37 and 38, respectively. On the conduit 36 in the position between the compressor 32 and the condenser 33 is provided a coolant supply inlet 39. Further, a filter 40 is provided on the conduit 36 in the position between the condenser 33 and the throttle valve 34.

In the cooler apparatus 31, the coolant fed thereto was in a state of coolant vapors A at the outlet of the evaporator 35 and the coolant vapors A were subjected to adiabatic compression by the mechanical work of the compressor 32 into vapors B having high temperature and high pressure. The vapors B were then allowed to be condensed with the condenser 33 at equal pressure into liquid C while radiating heat at a high level of temperature to the gas to be fed from the fan 37. At this time, the gas fed from the fan 37 was warmed to higher temperature and discharged toward the outside of the car.

Thereafter, the liquid C was subjected to enthalpy expansion by blowing from the throttle valve 34 or by other means and then converted into wet vapors D having low temperature. The wet vapors D were allowed to cool the gas fed from the fan 38 at a low level of temperature with the evaporator 35 by absorbing the temperature of the gas and they were returned to vapors A having low temperature and low pressure. At this time, the gas cooled by the evaporator 35 was discharged from a blowout opening 41 into the compartment of the car for cooling the car compartment.

As the cooler apparatus 31 is originally prepared to adapt its specification to the particular Fron R-12 as a coolant, it is considered that it may cause seizing during operation without exchanges of a lubricant for the compressor 32 when the substitute Fron R-134a is employed as a coolant. It is further considered that gases may leak without exchanges of O-rings for the filter 40.

In this example, the temperature of the gas discharged from the blowout opening was found to be 20.2 °C in its initial stage and it was decreased from the initial temperature by 28.2 °C to -8 °C after a continuous operation using the mixed coolant composition for 20 minutes. As a result, the mixed coolant composition according to the present invention achieved the cooling effects and there was shown no abnormality in the seizing of the compressor 32 and in the leakage of the gas and any other defects.

### (Example 2)

In this example, the coolant composition was prepared in substantially the same manner as in Example 1 with the exception that the preparatory cooling in the airtight closed container 1 prior to admixture and the cooling of the cooling jacket 2 during admixture were carried out with liquid oxygen fed from the liquid oxygen bomb 12a and a 2% sodium chloride aqueous solution was added to the coolant composition in the amount of 50 grams.

Then, the boiling point of the coolant composition prepared in this example was measured at each pressure level by means of the apparatus as shown in Fig. 1 in substantially the same manner as in Example 1. The results are shown in Fig. 2 and the results of Fig. 2 indicate that the coolant composition demonstrates the behaviors in a manner as equivalent of the particular Fron R-12.

Thereafter, the coolant composition prepared in this example was fed in the amount of 340 grams to the cooler apparatus 31 as shown in Fig. 3 from the service can. Further, the substitute Fron R-134a was gradually fed in the amount of 80 grams to the cooler apparatus 31 so as to allow admixture with the coolant composition to thereby yield a mixed coolant composition. The cooler apparatus 31 was then operated with the resulting mixed coolant composition to test the cooling action of the mixed coolant composition.

In this example, the temperature of the gas discharged from the blowout opening was found to be 13.8 °C in its initial stage and it was decreased from the initial temperature by 20.7 °C to -6.9 °C after a continuous operation using the mixed coolant composition for 20 minutes. As a result, the mixed coolant composition according to the present invention achieved the cooling effects and there was shown no abnormality in the seizing of the compressor 32 and in the leakage of the gas and any other defects.

### (Example 3)

In this example, a coolant composition was prepared in substantially the same manner as in Example 1 from raw materials including 500 grams of propylene glycol, 100 grams of a phosphate type surface-active agent solution, 150 grams of a lubricant and 50 grams of a 2% sodium chloride aqueous solution. As the phosphate type surface-active agent solution, the surface-active composition tank 17 was stored with a mixture in a ratio by weight of 1 of the phosphate type surface-active agent to 1 of ethyl ether. As the lubricant, the lubricant tank 18 was stored with a mixture in a ratio by weight of 1 of toluene to 1 of xylene to 1 of phthalic acid.

Then, the boiling point of the coolant composition prepared in this example was measured at each pressure level by means of the apparatus as shown in Fig. 1 in substantially the same manner as in Example 1. The results are shown in Fig. 2 and the results of Fig. 2 indicate that the coolant composition demonstrates the behaviors in a manner as equivalent of the particular Fron R-12.

Thereafter, the coolant composition prepared in this example was fed in the amount of 340 grams to a cooler apparatus 31 as shown in Fig. 3 from the service can. Further, the substitute Fron R-134a was gradually fed in the amount of 100 grams to the cooler apparatus 31 so as to allow admixture with the coolant composition to thereby yield a mixed coolant composition. The cooler apparatus 31 was then operated with the resulting mixed coolant composition to test the cooling action of the mixed coolant composition.

In this example, the temperature of the gas discharged from the blowout opening was found to be 17.6 °C in its initial stage and it was decreased from the initial temperature by 9.2 °C to 8.4 °C after a continous operation using the mixed coolant composition for 20 minutes. As a result, the mixed coolant composition according to the present invention achieved the cooling effects and there was shown no abnormality in the seizing of the compressor 32 and in the leakage of the gas and any other defects.

As is apparent from the foregoing description, the mixed coolant composition according to the present invention allows an intact operation of a conventional cooling apparatus for use with a particular Fron without exchanges of any parts and a lubricant for a compressor, it causes neither seizing of the compressor nor leaking gases, and it achieves the cooling action.

Further, the mixed coolant composition according to the present invention can prevent the seizing of the compressor of a conventional cooling apparatus by admixture with a lubricant.

The mixed coolant composition according to the present invention enables the conventional cooling apparatus for use with the particular Fron R-12 to be employed as it is by admixture with a substitute Fron called R-134a containing CF₃CH₂F as a major component.

## Claims

1. A mixed coolant composition characterized by a coolant composition and a substitute Fron for a coolant, said coolant composition obtainable by admixing a raw material composition containing one or more polyvalent alcohols, a surface-active composition and a lubricant in an airtight closed container cooled at a temperature of -30 °C or lower.

2. A mixed coolant composition as claimed in claim 1, wherein said polyvalent alcohol is ethylene glycol, propylene glycol, tripropylene glycol, diethylene glycol, triethylene glycol, tetraethylene glycol, dipropylene glycol, hexylene glycol or ethylene glycol dimethyl ether and wherein said polyvalent alcohol is employed singly or in admixture with two or more.

3. A mixed coolant composition as claimed in claim 1 or 2, wherein said surface-active composition contains a phosphate ester type surface-active agent.

4. A mixed coolant composition as claimed in any one of claims 1 to 3, wherein said lubricant is an alkylbenzene or a derivative thereof.

5. A mixed coolant composition as claimed in any one of claims 1 to 4, wherein said substitute Fron for a coolant is a coolant composition containing CF₃CH₂F as a major component.

6. A mixed coolant composition as claimed in any one of claims 1 to 5, wherein said raw material composition further contains a filler.

7. A mixed coolant composition as claimed in claim 6, wherein said filler is a sodium chloride aqueous solution.
